# EUROPEAN PATENT APPLICATION

(11) **EP 2 110 302 A1**
(43) Date of publication of application: **21.10.2009**
(21) Application number: 09009916.9
(22) Date of filing: 01.08.2003
(51) Int. Cl.: B62M 3/00, B62K 19/16, B29C 70/58

(54) **Bicycle component**

(30) Priority: 11.06.2003 EP 03425378
(62) Divisional of application: 03425530.7
(71) Applicant: CAMPAGNOLO S.r.l., 36100 Vicenza (VI) (IT)
(72) Inventor: Dal Pra', Giuseppe, 36010 Zanè-(VI) (IT); Dettori, Paolo, 36100 Vicenza (IT); Feltrin, Mauri, 36024 Nanto-(VI) (IT)
(74) Representative: Castiglia, Paolo

(57) **Abstract**

A bicycle component comprising an elongated body consisting of structural fibres incorporated in a matrix of polymeric material and having, in an end part thereof, a seat for mechanical coupling with an element of the bicycle, wherein in the zone between said seat and the end (11, 12) of said body (2) there is at least one continuous layer of structural fibres (13, 14; 33, 34; 53, 54; 413a, 413b, 413c, 413d) at least partially surrounding said seat (5, 6; 45, 46; 405a, 405b, 405c, 405d, 406) to ensure mechanical continuity in said zone (9, 10; 29, 30), **characterised in that** said matrix of polymeric material comprises small sheets of structural fibres arranged randomly inside the matrix.

## Description

The present invention relates to a bicycle component particularly suitable for being used in the assemblage of bicycle parts where high specific pressures are to be dealt with.

Throughout this patent description the component being referred to is a pedal crank, but what said can be extended to bicycle components which are different but which have characteristics similar to those of a pedal crank, like, for example, the seat tube.

According to the prior art, different types of pedal crank can be identified, with different shapes, materials and constructive techniques in order to achieve the object of reducing the weight as much as possible and, at the same time, ensuring, if not even improving, the characteristics of strength and reliability of the pedal crank.

The trend towards manufacturing lighter pedal cranks has led to the use of composite materials, in particular formed of sheets of plastic material made of resin, incorporating structural fibres. The structural fibres, indeed, considerably contribute to the structural strength of the pedal crank.

A known solution which uses the aforementioned technique is shown in EP 1 281 609 to the same Applicant, wherein the body of the pedal crank is obtained by moulding of a thermosetting composite material inside a mould in which metal inserts are arranged.

The composite material used in such a case is preferably of the type described in US 4 339 490 and consists of sheets formed of a resin matrix in which oblong or other shaped small sheets of structural fibres are incorporated, of a size between 1 and 100 mm and orientated randomly into the sheet. The use of such a type of composite material for moulding provides for a good compromise between obtaining good strength characteristics, typical of the structural fibres, and the need to keep a sufficient fluidity during moulding. The size of the small sheets, indeed, allows the composite material to flow sufficiently uniformly inside the mould, creating a pedal crank body with characteristics of good homogeneity.

However, the use of composite material in small sheets of structural fibres gives rise to some drawbacks.

A first drawback occurs during the moulding of the pedal crank, specifically in the end zones, where the metal inserts for the connection of the pedal crank to the bottom bracket and to the pedal are arranged.

The moulding technique used, indeed, provides for arranging a predetermined amount of composite material in the central zone of the mould and, during the moulding step, making such a composite material flow until all of the mould is filled, even the end zones where the metal inserts are arranged. During the moulding step, the composite material goes around the metal inserts following two distinct flows which join together close to the end of the pedal crank, completely encasing the inserts.

Disadvantageously, this causes a zone of discontinuity in the joint points of the two flows. Moreover, due to the greater fluidity of the resin with respect to that of the structural fibres and due to the long route (from the centre to the end of the mould), the end zones of the pedal crank have a greater percentage of resin with respect to the percentage in the rest of the pedal crank and, therefore, also lower strength with respect to the rest of the pedal crank.

Since the end zones of the pedal crank are subjected to substantial stress during pedalling, the two aforementioned drawbacks can lead to undesired breaking of the pedal crank in such zones.

Another drawback encountered in pedal cranks obtained by moulding of composite material of small sheets of structural fibres is the breaking of the pedal crank in its central zone. The occurrence of such a drawback is due to the fact that such a composite material with small sheets does not ensure sufficient strength in such a zone of the pedal crank.

The invention relates to a bicycle component comprising an elongated body consisting of structural fibres incorporated in a matrix of polymeric material and having, in an end part thereof, a seat for mechanical coupling with an element of the bicycle, wherein in the zone between said seat and the end of said body there is at least one continuous layer of structural fibres at least partially surrounding said seat to ensure mechanical continuity in said zone, **characterised in that** said matrix of polymeric material comprises small sheets of structural fibres arranged randomly inside the matrix.

Advantageously, the continuous layer of structural fibres gives high mechanical strength to the end zone of the pedal crank. In fact, it avoids the formation in such an end zone of discontinuities of structural fibres and a reduction in the percentage thereof with respect to resin.

Advantageously, the combination between a layer of continuous structural fibres and a layer of structural fibres in small sheets, randomly arranged in the layer, allows the component to have excellent structural strength, whilst still leaving good fluidity to the resulting composite material.

Further characteristics and advantages of the invention shall become clearer from the description of some preferred embodiments, given with reference to the attached drawings, where:
- fig. 1 represents a schematic axonometric view of the component of the invention;
- fig. 2 represents a section view from above of the component of fig. 1;
- fig. 3 represents a variant embodiment of the component of fig. 1;
- fig. 4 represents a section view from above of the component of fig. 3;
- fig. 5 represents another variant embodiment of the component of fig. 1;
- figures 6 to 11 represent different axonometric views of the semi-finished product of the invention;
- fig. 12 represents an exploded axonometric view of the mould used for manufacturing the component of the invention;
- fig. 13 represents an axonometric view of a detail of fig. 12;
- fig. 14 represents an exploded axonometric view of the mould used for manufacturing a variant of the component of the invention;
- fig. 15 represents an axonometric view of a variant embodiment relative to the progression of the continuous layers of structural fibres in a branched pedal crank;
- fig. 16 represents a plan view of fig. 15;
- fig. 17 represents another variant relative to the progression of the continuous layers of structural fibres in a branched pedal crank;
- fig. 18 represents an axonometric view of a further variant embodiment relative to the progression of the continuous layers of structural fibres in a branched pedal crank.

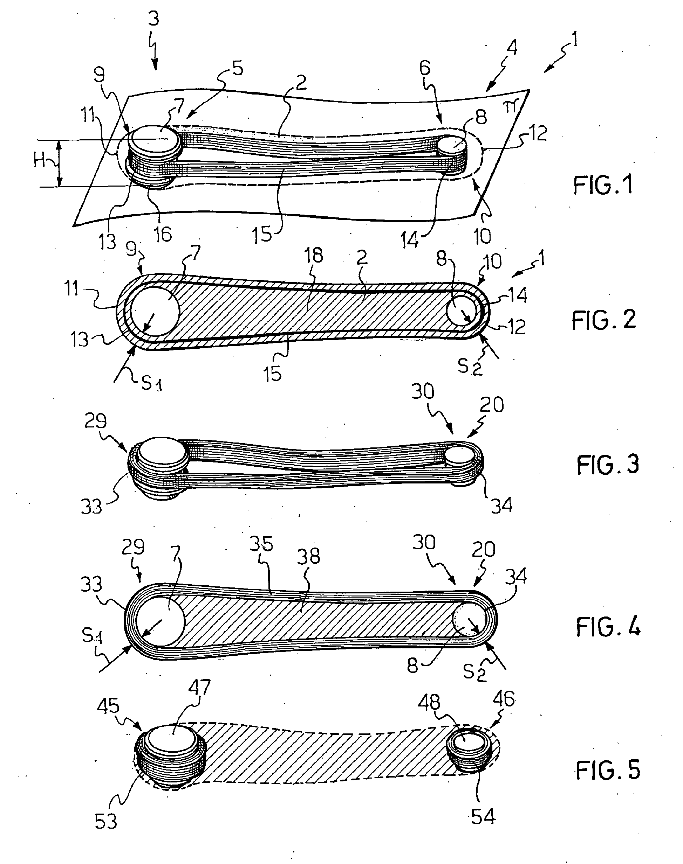

The component of the invention, shown and described, is a pedal crank wholly indicated in figs. 1 and 2 with 1. It essentially consists of an elongated body 2 formed of a composite material 18, comprising small sheets of structural fibres incorporated in a matrix of polymeric material, the small sheets being arranged randomly, as it can be seen more clearly in fig. 2. The pedal crank 1 has, at its end parts 3 and 4, respective seats 5 and 6 for mechanical coupling with the bottom bracket and with the pedal of the bicycle. The seats 5 and 6 incorporate cylindrical metal inserts 7 and 8 in which holes, not shown, are formed for connection to the bottom bracket and to the pedal, respectively.

In a variant embodiment of the invention, the seats 5 and 6 can consist of a hole of a suitable shape adapted to allow the direct connection of the pedal crank to the bottom bracket and to the pedal or else the subsequent insertion of metal inserts.

In the two end zones 9 and 10 of the pedal crank 1, between the seats 5 and 6 and the ends 11 and 12 of the body 2 of the pedal crank 1, there are continuous layers of structural fibres 13 and 14 which surround the end zones 9 and 10 of the seats 5 and 6. Such layers of continuous structural fibres 13 and 14 ensure that in such end zones 9 and 10 there is structural and mechanical continuity.

As it can be observed in fig. 1, the continuous layers of structural fibres 13 and 14 are made with unidirectional fibres which are orientated substantially parallel to the middle plane π of the pedal crank 1. By middle plane π of the pedal crank 1 we mean a substantially flat surface which intersects the pedal crank 1 longitudinally and divides it substantially in half along its height H. Given the typical shape of the pedal crank 1, such a surface is slightly curved when one moves from one end 11 to the other 12 of the pedal crank 1.

As it can be clearly seen in fig. 2, the continuous layers of structural fibres 13 and 14, which surround the end zones 9 and 10 of the seats 5 and 6, are realised in a single closed loop 15 of unidirectional fibres which extends longitudinally along the body 2 of the pedal crank 1. In other cases, such a configuration could be different, like for example a series of unidirectional structural fibres surrounding the two seats 5 and 6 according to a typical "8-shaped" configuration.

In fig. 2, the continuous layers of structural fibres 13 and 14 are provided only in a part of the thicknesses S1 and S2 of the end zones 9 and 10 and can, at most, also be reduced to a single layer. Moreover, such layers 13 and 14 are provided only for a part of the height H of the pedal crank 1 and are confined in height by means of an annular retainer element 16, coaxial to the insert 7.

The arrangement of a limited number of layers 13 and 14 of fibres in the pedal crank 1 implies that they are substantially covered with the composite material 18 with which the body 2 of the pedal crank 1 is made, as it can be seen more clearly in fig. 2.

A different solution is shown in figures 3 and 4, wherein the continuous layers of structural fibres 33 and 34 substantially fill both of the thicknesses S1 and S2 of the end zones 29 and 30 of the pedal crank 20. In this solution the composite material 38 with which the body 2 of the pedal crank 1 is made is confined inside the loop 35 defined by the continuous layers of fibres 33 and 34.

In fig. 5 a variant is shown of the arrangement of the continuous layers of structural fibres 53 and 54 which, in this case, completely and separately surround the two seats 45 and 46 and the corresponding metal inserts 47 and 48.

In different embodiments, not shown in the figures, the continuous layers of structural fibres can take different shapes and sizes. For example, such layers can extend, at the end zone, for all of the height H of the pedal crank 1. Moreover, such layers can be made of interwoven structural fibres according to at least two incident directions to make a fabric. In a preferred embodiment, such a fabric comprises a majority of fibres orientated according to a direction parallel to the middle plane of the pedal crank 1. Finally, it is possible that in further embodiments there are a plurality of continuous layers of structural fibres, according to any combination of the continuous layers described above.

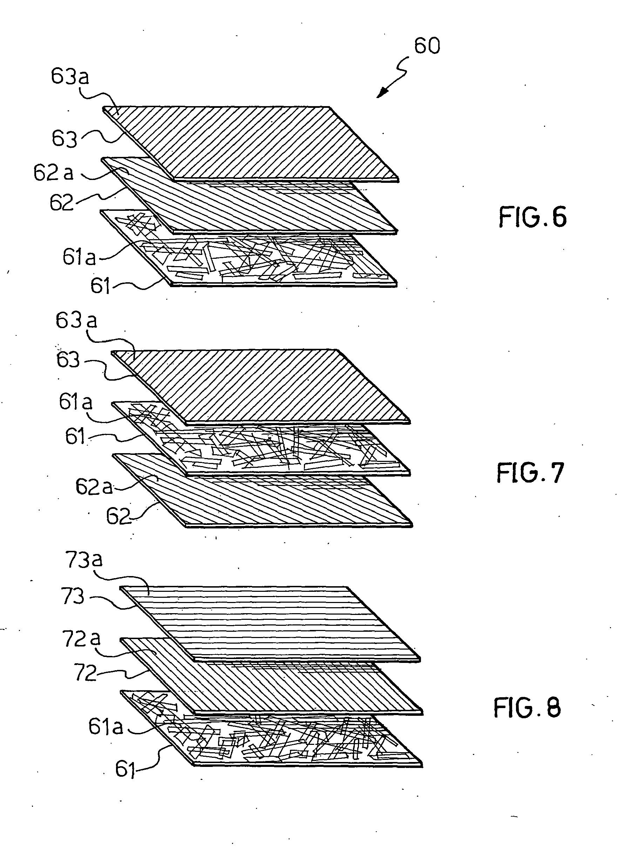

The pedal crank 1, and specifically its elongated body 2, according to the invention, is formed with a semi-finished product, indicated with 60 in fig. 6, consisting of three layers. One layer 61, formed of small sheets of structural fibre 61a incorporated in a matrix of polymeric material and arranged randomly inside the layer 61 and two layers 62 and 63 formed of continuous structural fibres 62a and 63a incorporated in a matrix of polymeric material and orientated according to directions which are complementary to each other, in particular -45° and +45°. The layers 61, 62 and 63 overlap one another and give the semi-finished product 60 characteristics of structural strength through the unidirectional fibres 62a and 63a and good characteristics of fluidity through the sheeted structure 61a, this last characteristic being exploited in the moulding step of the pedal crank 1.

The arrangement and number of the layers, as well as the directions of the structural fibres, can be chosen according to the particular properties of structural strength of the component wished to be obtained.

Thus, for example, in fig. 7 the layer 61 is arranged between the two layers 62 and 63.

The embodiment of fig. 8 differs from that of fig. 6 in that the unidirectional fibres 72a and 73a incorporated in the matrix of polymeric material of the respective layers 72 and 73 define complementary directions respectively orientated at +90° and 0°.

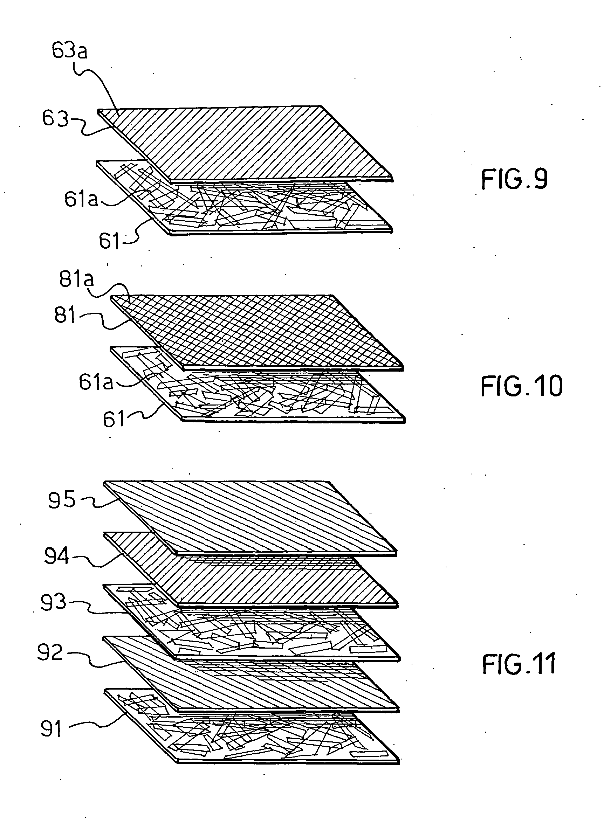

In fig. 9 the semi-finished product has a layer of small sheets of structural fibres 61a incorporated in a matrix of polymeric material overlapping a single layer 63 formed of continuous structural fibres 63a orientated according to the +45° direction.

In fig. 10 the semi-finished product has a layer of small sheets of structural fibres 61a and a layer 81 in which the continuous structural fibres 81a are arranged according to two incident directions forming a fabric configuration.

Finally, in fig. 11 a semi-finished product formed of five layers is shown. Two layers 91 and 93 formed of small sheets of structural fibres incorporated in a matrix of polymeric material intercalated in three layers 92, 94 and 95 formed of continuous structural fibres orientated according to directions chosen between ±45°.

The semi-finished product 60 used for manufacturing the body 2 of the pedal crank 1, according to any of the illustrated embodiments and all other possible configurations, can also be rolled around a rolling axis before its use in the moulding step, as it shall be seen hereafter. This allows the characteristics of unidirectional strength of the structural fibres to be distributed in space.

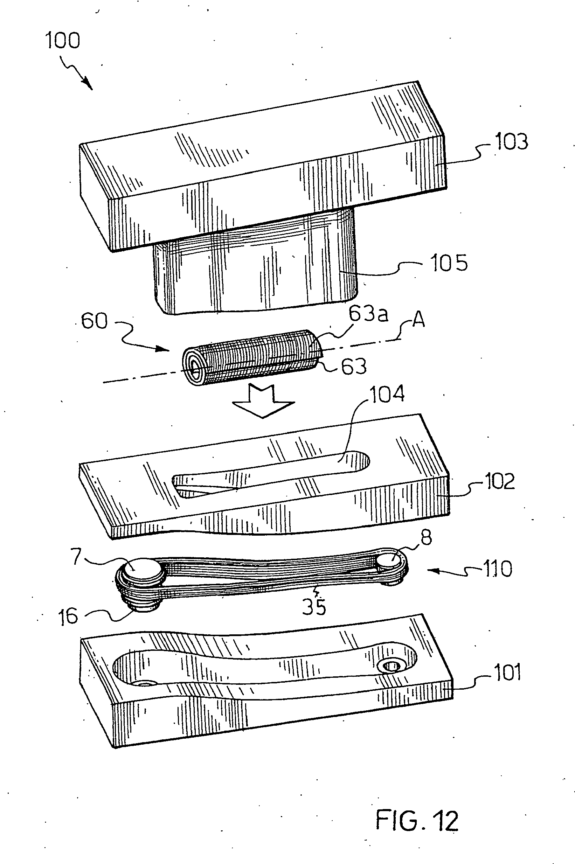

With reference to fig. 12, hereafter the method for manufacturing the pedal crank 20 shown in fig. 3 is described. However, it should be understood that the same method can be used for the other embodiments shown or described, for example those of figure 1 and 5.

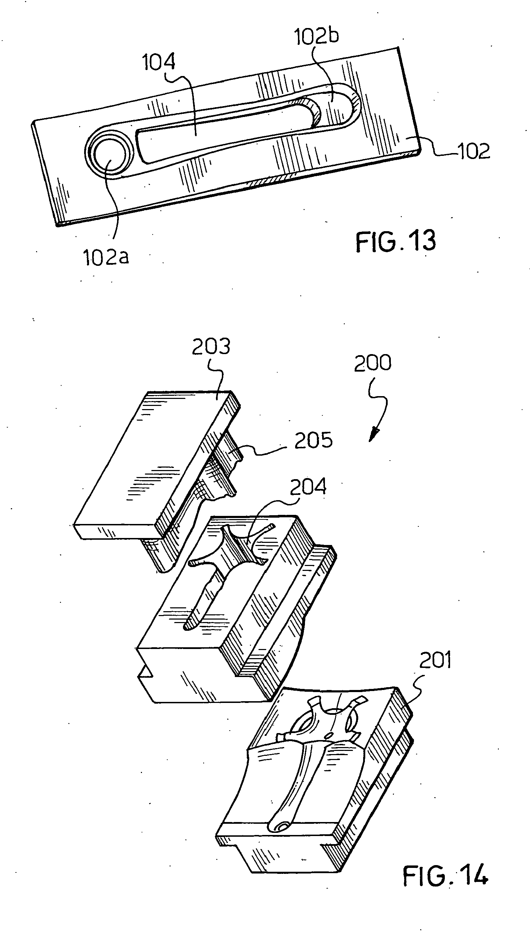

The method provides for the use of a mould 100 formed by three parts, consisting of two half-shells 101 and 102 and a plunger 103. The upper half-shell 102, as it can be seen more clearly in the bottom view thereof of fig. 13, has a through-opening 104 which allows the passage and the sliding of a presser element 105 of the plunger 103.

A first step of the method provides for the formation of the intermediate product 110 consisting of the inserts 7 and 8 on which the continuous layers of unidirectional structural fibres are wound in a closed loop configuration 35. Such an intermediate product 110 can be realised, for example, by winding a long fibre around the inserts 7, 8 with a number of layers sufficient to obtain the desired thickness and height. In particular, the arrangement of the fibres around the insert 7 is defined through the retainer element 16 which confines them in an upper portion of the insert 7. Experience has demonstrated, indeed, that it is precisely such a zone that is subjected to the greatest torsional stress during pedalling, thus requiring a greater structural strength.

The intermediate product 110 thus obtained is placed inside the lower half-shell 101 above which the upper half-shell 102 is closed so that its shapings 102a and 102b are in contact with the heads of the metal inserts 7 and 8.

When the mould 100 is closed, the semi-finished product 60 previously wound around the rolling axis A is inserted in the through opening 104. The winding of the semi-finished product 60 is realised so that its outer surface consists of the layer 63 formed of unidirectional fibres 63a. The semi-finished product 60 is pre-heated to ease the subsequent moulding.

After its insertion in the mould 100, the wound semi-finished product 60 is then in the zone defined between the inserts 7 and 8 and the inner part of the loop 35. The plunger 103 is lowered and the presser 105 slides inside the opening 104 of the upper half-shell 102 determining a thrusting action of the semi-finished product 60 inside the mould 100. During such a moulding step, the semi-finished product 60 uniformly fills the recess defined by the two half-shells 101 and 102, thanks to its fluidity. The closed loop configuration 35 of the unidirectional fibres allows them to keep their continuous configuration even during moulding, since the pressure forces applied by the composite material which constitutes the semi-finished product 60 are uniformly distributed along the loop 35. When the action of the presser 105 has ended, the mould 100 is heated, according to known techniques, and the material inside of it polymerises thus realising the desired pedal crank structure. Finally, the mould 100 is opened and the pedal crank is removed.

It is clear that for the described method any of the semi-finished products described above can be used, possibly even in non-wound configuration. If one wishes to manufacture the pedal crank according to the shape shown in fig. 5, it is then advisable for the intermediate product, in this case consisting of the inserts on which the unidirectional fibres are individually wound, to undergo a prepolymerisation treatment, so that the subsequent moulding does not modify the shape of the wound fibres.

In fig. 14 a variant of the mould shown in fig. 12 is shown which is used for manufacturing a branched pedal crank, commonly known as right pedal crank. Such a method differs from the previous one in that the semi-finished product, when inserted in the mould 200, covers the top of the metal insert intended for coupling with the bottom bracket. In this case, the access to such a metal insert can take place by the subsequent removal of material through machining. Or else, instead of the metal insert a support can be used for the winding of the unidirectional fibres which remains incorporated in the pedal crank and then a seat can be formed, through machining, for direct coupling with the bottom bracket or the insertion of a metal insert. It is also clear that the mould 200 can be modified so as to obtain a right pedal crank in which also the insert intended for coupling with the bottom bracket is immediately accessible.

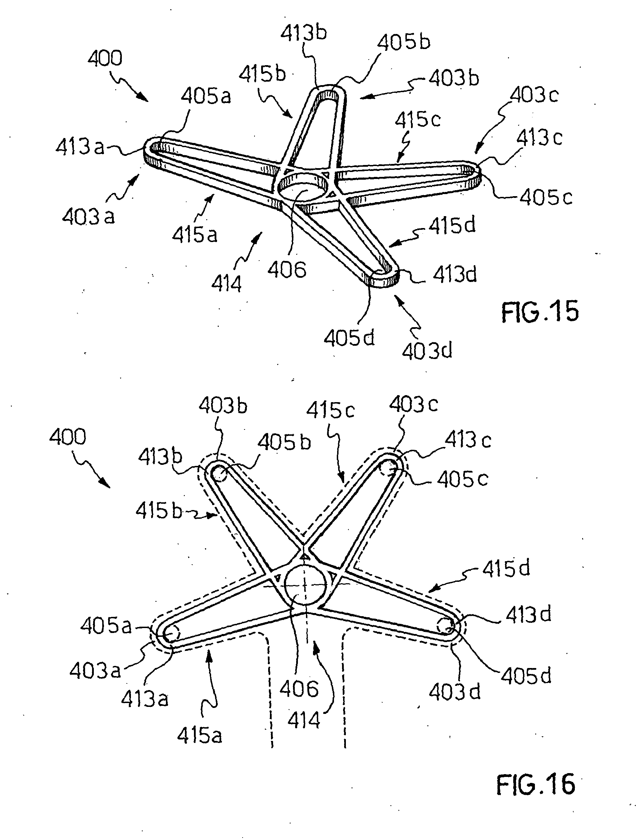

Figs. 15 and 16 show the progression of the continuous layers of structural fibres 413a, 413b, 413c, 413d for manufacturing a branched pedal crank, commonly referred to as a right pedal crank.

In such a case it is desired to ensure high structural and mechanical continuity of the end parts 403a, 403b, 403c, 403d of the spokes, in number of four in the case represented, where respective seats 405a, 405b, 405c, 405d which allow the connection to the front toothed crowns of the bicycle are formed. The seats 405a, 405b, 405c, 405d can incorporate respective metal inserts in which suitable holes for the connection to the toothed crowns are formed, or else they can consist of a hole of a suitable shape such as to allow the direct connection of the toothed crowns to the spokes of the pedal crank. For the sake of simplicity of explanation, no insert is shown in the figures.

As shown in the embodiment of the figures, the continuous layers of structural fibres 413a, 413b, 413c, 413d partially surround the seats 405a, 405b, 405c, 405d of the end parts 403a, 403b, 403c, 403d of the spokes for an arc of circumference of about 180°. Such layers are each arranged in such a way as to form respective loops 415a, 415b, 415c, 415d which close on the central zone 414 where the pedal crank has a suitable seat 406 for the connection to the bottom bracket.

The structural fibres thus arranged define an intermediate product 400 which is star-shaped. As shown in fig. 15, such an intermediate product 400 is advantageously made through continuous winding, along suitable paths, of continuous layers of unidirectional fibre. The intermediate product 400 can be made directly inside the mould, for example inside the mould shown in fig. 14, or else it can be made separately using a mask which mirrors the shape of the spokes. The manufacturing of the intermediate product 400 separately allows a prior preheating of the fibres to be realised and allows them to be given a pre-shaping before the positioning *in loco* into the mould.

The intermediate product 400 is arranged inside the mould 200 on a plane overlapping the one in which the closed loop of structural fibres 15 (represented in fig. 2) is arranged, said fibres being arranged along the elongated body 2 of the pedal crank. The configuration thus obtained allows a right pedal crank to be manufactured having simultaneously the zones intended for coupling with the pedal and with the bottom bracket and the ends of the spokes with high structural and mechanical continuity.

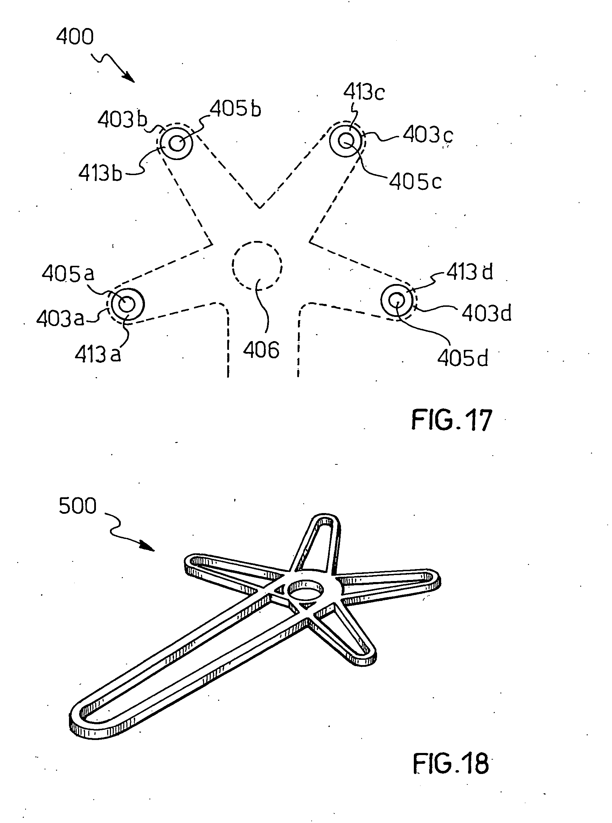

In a variant embodiment, shown in fig. 17, each seat 405a, 405b, 405c, 405d can be completely surrounded by structural fibres 413a, 413b, 413c, 413d by using a closed loop configuration of the type shown in fig. 5.

The same result can be obtained through the manufacturing of a pre-formed semi-finished product 500, as shown in figure 18, where the continuous layers of structural fibres associated with the spokes and with the main body are on the same plane and substantially constitute a single element according to a comet-shape. As for the previous case, the intermediate product 500 can be manufactured directly inside the mould or else can be manufactured separately using a mask which mirrors the shape of the pedal crank.

## Claims

1. Bicycle component (1; 20) comprising an elongated body (2) consisting of structural fibres incorporated in a matrix of polymeric material (18; 38) and having, in an end part thereof (3, 4; 403a, 403b, 403c, 403d), a seat (5, 6; 45, 46; 405a, 405b, 405c, 405d, 406) for mechanical coupling with an element of the bicycle, wherein in the zone (9, 10; 29, 30) between said seat (5, 6; 45, 46; 405a, 405b, 405c, 405d, 406) and the end (11, 12) of said body (2) there is at least one continuous layer of structural fibres (13, 14; 33, 34; 53, 54; 413a, 413b, 413c, 413d) at least partially surrounding said seat (5, 6; 45, 46; 405a, 405b, 405c, 405d, 406) to ensure mechanical continuity in said zone (9, 10; 29, 30), **characterised in that** said matrix of polymeric material comprises small sheets of structural fibres arranged randomly inside the matrix.

2. Component (1; 20) according to claim 1, **characterised in that** said continuous layer of structural fibres is made of fibres interwoven according to at least two incident directions to make a fabric or is made of unidirectional fibres orientated according to a direction substantially parallel to the middle plane (π) of the component (1; 20).

3. Component (1; 20) according to claim 2, **characterised in that** said continuous layer of structural fibres is made of fibres interwoven according to at least two incident directions to make a fabric and said fabric comprises a majority of fibres orientated according to a direction substantially parallel to the middle plane of the component.

4. Component (1; 20) according to any of the previous claims, **characterised in that** it comprises a plurality of continuous layers of structural fibres (13, 14; 33, 34; 53, 54; 413a, 413b, 413c, 413d).

5. Component (1; 20) according to any of the previous claims, **characterised in that** said continuous layer of structural fibres (33, 34; 413a, 413b, 413c, 413d) surrounds all of the zone (9, 10; 29, 30) between said seat (5, 6; 45, 46; 405a, 405b, 405c, 405d, 406) and said end (11, 12 or completely surrounds said seat (45, 46; 406).

6. Component (1; 20) according to any of the previous claims, **characterised in that** said seat (5, 6; 45, 46; 405a, 405b, 405c, 405d, 406) consists of a hole adapted to accomplish the direct coupling with the element of the bicycle, or adapted to receive a metal insert (7, 8; 47, 48), or incorporating a metal insert (7, 8; 47, 48) adapted to accomplish the coupling with the element of the bicycle.

7. Component (1; 20) according to any of the previous claims, **characterised in that** said continuous layer of structural fibres (13, 14; 33, 34; 53, 54; 413a, 413b, 413c, 413d) is confined in said end zone (9, 10; 29, 30) for part of the height (H) of the component (1; 20) or extends in said end zone (9, 10; 29, 30) for the whole height (H) of the component (1; 20).

8. Component (1; 20) according to claim 7, **characterised in that** said continuous layer of structural fibres (13, 14; 33, 34; 53, 54; 413a, 413b, 413c, 413d) is confined in said end zone (9, 10; 29, 30) for part of the height (H) of the component (1; 20) by an annular retainer element (16).

9. Component (1; 20) according to any of the previous claims, **characterised in that** said continuous layer of structural fibres (13, 14) is confined in said end zone (9, 10) for a part of its thickness (S1, S2) or extends in said end zone (29, 30) for its whole thickness (S1, S2).

10. Component (1; 20) according to any of the previous claims, **characterised in that** it has, at its second end part (4, 3), a second seat (6, 5; 46, 45; 406) for the mechanical coupling with a second component of the bicycle and **in that** at the zone (10, 9; 30, 29) between said second seat (6, 5; 46, 45; 406) and said second end part (4, 3) there is at least one continuous layer of structural fibres (13, 14; 33, 34; 53, 54) at least partially surrounding said second seat (6, 5; 46, 45; 406) to ensure mechanical continuity in said zone (10, 9; 30, 29).

11. Component (1; 20) according to claim 10, **characterised in that** said continuous layer of structural fibres (13, 14; 33, 34) surrounds said first and second seats (5, 6; 406) forming a closed loop (15; 35) or realising a substantially "8-shaped" configuration.

12. Component (1; 20) according to claim 10 or 11, **characterised in that** it comprises one or more arms diverging from said elongated body which have, on their free end part (403a, 403b, 403c, 403d), third seats (405a, 405b, 405c, 405d) for the mechanical coupling with a third component of the bicycle and **in that** in at least one of the zones between said third seats (405a, 405b, 405c, 405d) and the respective end parts (403a, 403b, 403c, 403d) there is at least one continuous layer of structural fibres (413a, 413b, 413c, 413d) at least partially surrounding said third seats (405a, 405b, 405c, 405d) to ensure mechanical continuity in said zones.

13. Component (1; 20) according to claim 12, **characterised in that** said continuous layer of structural fibres (413a, 413b, 413c, 413d) surrounds at least one of said third seats (405a, 405b, 405c, 405d) and said second seat (406) forming a closed loop (415a, 415b, 415c, 415d).

14. Component (1; 20) according to claim 12 or 13, **characterised in that** said continuous layer of structural fibres (413a, 413b, 413c, 413d) surrounds each of said third seats (405a, 405b, 405c, 405d) and said second seat (406) according to a star-shaped configuration or simultaneously surrounds said third seats (405a, 405b, 405c, 405d), said second seat (406)and said first seat (5) according to a comet-shaped configuration.

15. Component (1; 20) according to claim 12, **characterised in that** said continuous layer of structural fibres completely surrounds at least one of said third seats (405a, 405b, 405c, 405d).
